# EUROPEAN PATENT SPECIFICATION

(11) **EP 2 379 896 B1**
(45) Date of publication and mention of the grant of the patent: **09.03.2016**
(21) Application number: 09799408.1
(22) Date of filing: 16.12.2009
(51) Int. Cl.: F16B 37/02

(54) **SHEET METAL NUT**
BLECHMUTTER
ÉCROU EN TÔLE

(30) Priority: 19.12.2008 ES 200803740
(43) Date of publication of application: 26.10.2011
(73) Proprietor: ITW Metal Fasteners SL, 08205 Sabadell (Barcelona) (ES)
(72) Inventor: FUENTES DOMINGO, Ismael, E-08210 Barcelona (ES)
(74) Representative: Canela Giménez, Teresa
(86) International application number: PCT/IB2009/055797
(87) International publication number: WO 2010/070598

(56) References cited:
- EP-A1- 1 674 740
- WO-A2-2007/131166
- DE-A1- 4 105 541
- US-A1- 2003 095 847

## Description

### SCOPE OF THE INVENTION

This invention describes a nut, of the type that is used in particular to attach sheetmetals to panels, mainly to thermally insulate vehicles, whereby said nut is implemented by means of a threaded tube that expands into a hexagonal periphery part extended by a peripheral dome segment that terminates in a support disk.

### BACKGROUND

The major requirements in the automotive industry and the desire of the manufacturers to meet these requirements by providing parts that have enhanced performance have led to the creation of nuts that make it easy to install them quickly and that improve the way they work.

DE4105541 is a nut with a threaded sleeve, a clamping sleeve, a backup disk or washer and a shoulder. The clamping sleeve is hexagonal shaped, permitting to be wrenched by a tool. The shoulder is a union between threaded sleeve and the clamping sleeve owever, the small elastic behavior of said union or rounded opening depending on the thickness of whole nut material, does not allow an adequate response against excessive torque. Said nut lacks sufficient elasticity

For example, WO-A-2009/068959, granted to this applicant, discloses a speed nut made of a sheetmetal which, by being bent, forms superposed surfaces that are separated by a central hole which constitutes a double thread to pass a screw, further forming a base part, a flexible-arm part, and a periphery-wall part in the shape of a hexagon allowing using a tightening tool.

Said nut has an elasticity range that makes it possible to resist the forces arising from the vehicle vibrations tending to unscrew it. In addition, the double thread prevents the nut from being ruptured by over-tightening by virtue of the fact that it has a high tightening torque limit. The above-described nut has proven to be very useful due to its ease of installation and the features that it offers.

The goal of this invention is to enhance the ease of installation of this nut and to increase the tightening torque rupture limit of this nut, as well as to increase its elastic efficacy.

These and other advantages of the invention will become clear from the description of the invention that is given below.

### BRIEF DESCRIPTION OF THE INVENTION

This invention describes a nut, of the type that is used to attach sheetmetals to panels, mainly in the thermal insulation of vehicles, whereby said nut is formed by a threaded tube and by a hexagonal periphery part that extends into a peripheral dome segment that terminates in a support disk.

This invention achieves the desired goals. Specifically, the elastic range has been increased owing to the connecting arch between the support disk and the unit constituted by the threaded tube and the hexagonal periphery part. In addition, there is an increase in the tightening torque that it takes to cause the breakage of the nut by increasing the contact between the thread and the screw.

Moreover, the nut of the invention is easy to install because its shape makes it simple to orient the screw at the time of installation.

### BRIEF DESCRIPTION OF THE DRAWINGS

To make it easier to understand the invention, a sheet of drawings is attached hereto, which are provided solely for purposes of illustration and are not limiting with respect to the invention.
Figure 1 is a perspective view of a nut in accordance with the main embodiment of this invention.
Figure 2 is an elevational cross-section of the nut shown in the previous figure.
Figure 3 is a perspective view of another possible embodiment of this invention.

### DETAILED EXPLANATION OF THE INVENTION

This invention consists of a nut, of the type used to attach sheetmetals to panels, mainly in the thermal insulation of vehicles, whereby said nut comprises a support disk, a hexagonal-shaped periphery for the optional application of a tightening tool, and a hole to pass a screw, said nut being composed of a stamped threaded tube (1) and a hexagonal-periphery part (2), which extends into a peripheral dome segment (3) terminating in an annular support disk (4).

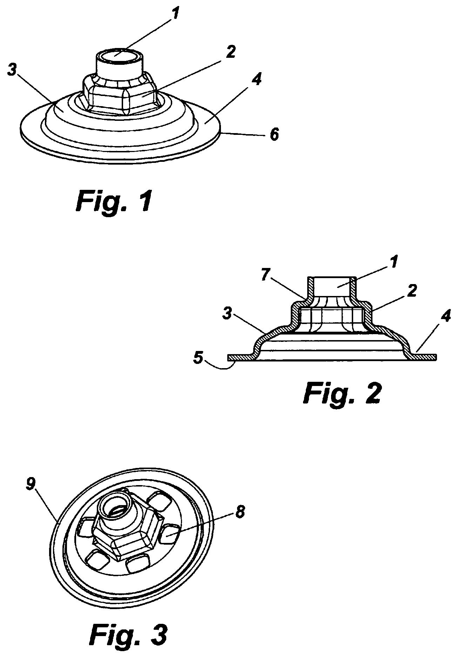

In the preferred embodiment of the invention, which is depicted in Figures 1 and 2, there is a shoulder or rounded opening (7) that joins the threaded tube (1) and the stamped hexagon (2), which makes it easier to align the screw correctly at the time of the nut installation.

Compared to the state of the art for example, the implementation of the technique described above, thanks to its double threading, represents an increase in torque to raise the level of permissible screw tightening. The invention represents an improvement since in it several convolutions of the threading of the threaded tube (1) are in contact with the screw, reducing wear and tear on it and at the same time also increasing the tightening torque that is necessary to cause the possible rupture of the nut.

The peripheral dome segment (3) ensures an improved elastic response to handle the forces that tend to unscrew the nut arising from the vibrations of the vehicle; in the invention these vibrations are absorbed by the nut.

At its bottom, the annular support disk (4) offers a large contact surface (5) that is suitable for a nut attaching panels to the thermal insulator. To prevent the part from stressing its surface by which it is mounted on the thermal insulator -- which is normally made of aluminum -- in screwing down the stamped nut against the thermal insulation, in the embodiment shown in Figure 3, the edge (6) of the support disk (4) is rounded. Optionally, it is also possible to add a straight or curved bevel (9) at said rounded edge (6) of the disk.

Another possible modification to the embodiment of this invention consists in including recesses (8) in the form of windows, as shown in Figure 3, the purpose of which is to improve the elastic response of peripheral dome segment (3) to vibrations.

It is understood that many details of finishing and shape are included in this invention as defined by the appended claims. For example, said threaded tube (1) may be located further or less far inside the stamped hexagonal nut (2) in order to reduce the overall height of the part, whereby it may even be located all the way inside to match short screws.

## Claims

1. NUT, of the type used to attach sheet metals to panels, mainly in the thermal insulation of vehicles, which comprises a support disk (4), a hexagon-shaped periphery part (2) for the optional application of a tightening tool, and an opening to receive a screw, **CHARACTERIZED by** the fact that said nut consists of a stamped threaded tube (1) and an externally hexagonal part (2) where said threaded tube protrudes upwards more or less from said hexagonal part, and/or more or less extends inside said hexagonal part, said hexagonal part (2) extending downwardly in a dome segment (3) that terminates in an annular support disk (4).

2. NUT, according to claim 1, **CHARACTERIZED by** the fact that it has a rounded shoulder or opening (7) that joins externally said threaded tube (1) and said externally hexagonal part (2).

3. NUT, according to the preceding claims, **CHARACTERIZED by** the fact that the cross-section of the edge (6) of said annular support disk (4) is rounded (6).

4. NUT, according to the preceding claims, **CHARACTERIZED by** the fact that the cross-section of said end (6) of said annular support disk (4) has a straight or curved bevel (9).

5. NUT, according to the preceding claims, **CHARACTERIZED by** the fact that said dome segment (3) includes recesses (8) in form of windows in its surface.

6. NUT, according to the preceding claims, **CHARACTERIZED by** the fact that said threaded tube (1) is located all the way inside said stamped externally hexagonal part (2).

## Patentansprüche

1. Mutter jener Art, die zur Befestigung von Blechen an Platten verwendet wird, hauptsächlich bei der Wärmeisolierung von Fahrzeugen, umfassend eine Trägerscheibe (4), einen sechseckigen Umfangsteil (2) für das wahlweise Anlegen eines Festziehwerkzeugs und eine Öffnung zur Aufnahme einer Schraube, **dadurch gekennzeichnet, dass** die Mutter aus einem gestanzten Gewindetubus (1) und einem außen sechseckigen Teil (2) besteht, wobei der Gewindetubus mehr oder weniger nach oben aus dem sechseckigen Teil ragt und/oder sich mehr oder weniger in dem sechseckigen Teil erstreckt, wobei sich der sechseckige Teil (2) nach unten in ein kalottenförmiges Segment (3) erstreckt, das in einer ringförmigen Trägerscheibe (4) endet.

2. Mutter nach Anspruch 1, **dadurch gekennzeichnet, dass** sie eine abgerundete Schulter oder Öffnung (7) aufweist, die außen mit dem Gewindetubus (1) und dem außen sechseckigen Teil (2) verbunden ist.

3. Mutter nach den vorhergehenden Ansprüchen, **dadurch gekennzeichnet, dass** der Querschnitt des Rands (6) der ringförmigen Trägerscheibe (4) abgerundet (6) ist.

4. Mutter nach den vorhergehenden Ansprüchen, **dadurch gekennzeichnet, dass** der Querschnitt des Endes (6) der ringförmigen Trägerscheibe (4) eine gerade oder gekrümmte Abschrägung (9) aufweist.

5. Mutter nach den vorhergehenden Ansprüchen, **dadurch gekennzeichnet, dass** das kalottenförmige Segment (3) in seiner Oberfläche Aussparungen (8) in Form von Fenstern aufweist.

6. Mutter nach den vorhergehenden Ansprüchen, **dadurch gekennzeichnet, dass** der Gewindetubus (1) vollständig im Inneren des gestanzten außen sechseckigen Teils (2) positioniert ist.

## Revendications

1. Ecrou, du type utilisé pour attacher des tôles métalliques à des panneaux, principalement pour l'isolation thermique de véhicules, comprenant un disque de support (4), une partie périphérique de forme hexagonale (2) pour l'application optionnelle d'un outil de serrage, et une ouverture pour recevoir une vis, **caractérisé en ce que** ledit écrou est constitué d'un tube fileté estampé (1) et d'une partie de forme extérieure hexagonale (2), ledit tube fileté faisant saillie vers le haut plus ou moins depuis ladite partie hexagonale, et/ou s'étendant plus ou moins à l'intérieur de ladite partie hexagonale, ladite partie hexagonale (2) s'étendant vers le bas dans un segment en forme de dôme (3) qui se termine par un disque de support annulaire (4).

2. Ecrou selon la revendication 1, **caractérisé en ce qu'**il présente un épaulement ou une ouverture arrondi(e) (7) qui joint à l'extérieur ledit tube fileté (1) et ladite partie de forme extérieure hexagonale (2).

3. Ecrou selon les revendications précédentes, **caractérisé en ce que** la section transversale du bord (6) dudit disque de support annulaire (4) est arrondie (6).

4. Ecrou selon l'une quelconque des revendications précédentes, **caractérisé en ce que** la section transversale de ladite extrémité (6) dudit disque de support annulaire (4) a un biseautage droit ou courbe (9).

5. Ecrou selon l'une quelconque des revendications précédentes, **caractérisé en ce que** ledit segment en forme de dôme (3) comporte des retraits (8) en forme de fenêtre dans sa surface.

6. Ecrou selon l'une quelconque des revendications précédentes, **caractérisé en ce que** ledit tube fileté (1) est situé complètement à l'intérieur de ladite partie estampée de forme extérieure hexagonale (2).
